# EUROPÄISCHE PATENTSCHRIFT

(11) **EP 0 670 435 B1**
(45) Veröffentlichungstag und Bekanntmachung des Hinweises auf die Patenterteilung: **23.04.1997**
(21) Anmeldenummer: 94116865.0
(22) Anmeldetag: 26.10.1994
(51) Int. Cl.: F16F 3/10, F16F 1/44

(54) **Elastisches Lager**
Elastic mounting
Support élastique

(30) Priorität: 08.02.1994 DE 4403860
(43) Veröffentlichungstag der Anmeldung: 06.09.1995
(73) Patentinhaber: Firma Carl Freudenberg, D-69469 Weinheim (DE)
(72) Erfinder: Kurr, Klaus, Dr., D-69469 Weinheim (DE); Barth, Armin, D-69517 Gorxheimertal (DE); Schweikert, Willi, D-69123 Heidelberg (DE); Sander, Hans-Gerhard, D-69469 Weinheim (DE)

(56) Entgegenhaltungen:
- DE-A- 4 116 270
- DE-U- 8 809 484
- GB-A- 475 461
- GB-A- 1 001 163
- GB-A- 1 004 803
- US-A- 2 470 185

## Beschreibung

Die Erfindung betrifft ein elastisches Lager, umfassend ein Auflager und ein Traglager, die jeweils mit einem Befestigungselement versehen sind und durch zumindest einen Federkörper aus elastomerem Werkstoff und zumindest eine Dämpfungsvorrichtung aufeinander abgestützt sind.

Ein solches Lager ist aus der DE 38 40 156 A1 bekannt. Das Lager ist als Motorlager zur Abstützung von Verbrennungskraftmaschinen ausgebildet, wobei das Auflager und das Traglager durch eine Gummifeder und ein Tellerfederpaket aufeinander abgestützt sind. Die Gummifeder und das Tellerfederpaket sind in einer funktionstechnischen Parallelschaltung zueinander angeordnet, wobei das Tellerfederpaket eine S-förmig verlaufende Federkennlinie aufweist. Unter statischer Vorlast des abzustützenden Motors sind die beiden Federelemente derart aufeinander abgestimmt, daß die Federrate des Tellerfederpakets im wesentlichen Null und die Gummifeder im wesentlichen frei von elastischen Spannungen ist. Das vorbekannte Lager weist gute Gebrauchseigenschaften während einer langen Gebrauchsdauer auf und kann bei Umgebungstemperaturen von bis zu 160°C zur Anwendung gelangen. Zur Unterdrückung von tieffrequenten Schwingungen mit großen Amplituden weist das vorbekannte Lager eine hydraulische Dämpfungseinrichtung auf, die zwei nach außen abgeschlossene Räume umfaßt, die flüssigkeitsleitend miteinander verbunden und mit einer Dämpfungsflüssigkeit gefüllt sind.

Der Erfindung liegt die Aufgabe zugrunde, ein Lager der vorbekannten Art derart weiterzuentwickeln, daß es bei unverändert guten Gebrauchseigenschaften, insbesondere bei einer gleichbleibend guten Dämpfungscharakteristik tieffrequenter Schwingungen, einen wesentlich vereinfachten Aufbau aufweist und dadurch in wirtschaftlicher Hinsicht kostengünstiger herstellbar ist. Außerdem soll das Lager kompakte Abmessungen haben.

Diese Aufgabe wird durch die erfindungswesentlichen Merkmale des Hauptanspruchs gelöst. Auf vorteilhafte Ausgestaltungen nehmen die Unteransprüche Bezug.

Zur Lösung der Aufgabe ist es vorgesehen, daß das Auflager einen sich im wesentlichen quer zur Richtung der eingeleiteten Schwingungen erstreckenden Stützkörper aus zähhartem Werkstoff umfaßt, daß das Traglager ein trommelförmiges Gehäuse umfaßt, das den Stützkörper im wesentlichen allseitig umschließt, daß der Stützkörper zumindest einem als Dämpfungsvorrichtung ausgebildeten ringförmigen Dämpfungselement aus elastomerem Werkstoff zugeordnet ist, das unter statischer Vorlast des Lagers im wesentlichen Spannungsfrei die stirnseitigen Innenflächen des Gehäuses anliegend berührt und daß in der zylinderförmigen Ausnehmung des Dämpfungselements, axial beiderseits des Stützkörpers, zumindest jeweils ein Federkörper angeordnet ist und daß die Federkörper unter axialer Vorspannung zwischen der Oberfläche des Stützkörpers und der jeweils angrenzenden stirnseitigen Innenfläche des Gehäuses abgestützt sind. Bei einem derart ausgebildeten Lager ist der teilearme und einfache Aufbau von hervorzuhebender Bedeutung. Das in fertigungstechnischer Hinsicht einfach und wirtschaftlicher Hinsicht außerordentlich kostengünstig herzustellende Lager weist unter Vermeidung einer hydraulischen Dämpfungsvorrichtung gute Gebrauchseigenschaften bezüglich der Isolierung höherfrequenter und der Dämpfung tieffrequenter Schwingungen während einer langen Gebrauchsdauer auf. Das erste Befestigungselement, der Stützkörper, der aus einem metallischem Werkstoff bestehen kann und das ringförmige Dämpfungselement sind bevorzugt als vormontierbare Einheit ausgebildet und durch die beiden Federkörper, insbesondere durch den unter statischer Vorlast druckbelasteten Federkörper, innerhalb des als Traglager ausgebildeten Gehäuses elastisch nachgiebig abgestützt.

Gemäß einer vorteilhaften Ausgestaltung ist es vorgesehen, daß zumindest der unter statischer Vorlast des Lagers druckbelastete Federkörper zweiteilig ausgebildet ist und aus einem ringförmigen Federelement aus elastomerem Werk stoff und einem funktionstechnisch dazu in Reihe geschalteten Tellerfederpaket, umfassend zumindest zwei Tellerfedern, besteht und daß die Federrate des druckbelasteten Tellerfederpakets unter statischer Vorlast des Lagers im wesentlichen Null ist. Das Tellerfederpaket ist derart mit der statisch aufzunehmenden Last des Lagers abgestimmt, daß die sich ergebende Verformung im schwingungsfreien Zustand im wesentlichen innerhalb des sich horizontal erstreckenden Bereichs der Federkennlinie liegt. Hierdurch wird eine nahezu vollständige Kompensierung des Gewichts des abzustützenden Bauteils erreicht, so daß sich ausgezeichnete Isolationseigenschaften betriebsbedingt eingeleiteter hochfrequenter Schwingungen im akustisch wirksamen Bereich ergeben. Die gesamte Last des zu tragenden Bauteils wird unter statischer Vorlast von den verformten Tellerfedern aufgenommen. Das Dämpfungselement ist herstellungsbedingt bezüglich seiner geometrischen Messungen derart dimensioniert, daß es unter statischer Vorlast nahezu keinen Belastungen ausgesetzt ist. Im herstellungsbedingten Zustand des Lagers, wenn noch kein abzustützendes Bauteil montiert ist, wird die dem abzustützenden Maschinenteil zugewandte Seite des Dämpfungselements unter axialer elastischer Vorspannung an die Innenseite des Gehäuses gedrückt. Gemäß einer vorteilhaften Ausgestaltung ist es vorgesehen, daß das Lager um die Stützplatte gespiegelt im wesentlichen symmetrisch ausgebildet ist. Daher gelangen bevorzugt in axialer Richtung beiderseits der Stützplatte jeweils ein Tellerfederpaket zur Anwendung, das auf einem angrenzenden Federelement aus elastomerem Werkstoff abgestützt ist. Hierbei ist von Vorteil, daß lastwechselbedingte Schwingungen gedämpft/isoliert werden können. Durch eine derartige Ausgestaltung ergibt sich ein doppelt wirkendes Lager, das Belastungen sowohl in Druck- als auch in Zugrichtung aufnehmen kann. Abhängig von den Belastungen in Richtung der eingeleiteten Schwingungen können die in axialer Richtung beiderseits der Stützplatte angeordneten Federkörper, bestehend aus dem elastomeren Federelement und dem Tellerfederpaket, voneinander abweichende Federkennlinien aufweisen. Das ringförmige Federelement bewirkt eine Verbesserung der akustischen Entkopplung höher frequenter Schwingungen. An den Federeigenschaften während der bestimmungsgemäßen Verwendung des Lagers sind die elastomeren Federelemente nicht maßgeblich beteiligt.

Um unverändert gute Gebrauchseigenschaften während der gesamten Gebrauchsdauer des Lagers sicher zu gewährleisten, kann auf der dem Tellerfederpaket zugewandten Stirnseite des Federelements eine Armierung angeordnet sein, die das Tellerfederpaket in Richtung der eingeleiteten Schwingungen umfangsseitig zumindest teilweise umschließt und eine Außenführung bildet, wobei die Armierung zur Begrenzung der relativen Auslenkbewegungen von Stützkörper und Gehäuse als Anschlagpuffer ausgebildet sein kann, der mit dem axial mit Abstand benachbarten Stützkörper oder Gehäuse in Berührung bringbar ist.

Die Armierung kann beispielsweise durch einen topfförmigen Blechring gebildet sein, der mit dem jeweils angrenzenden Federelement adhäsiv verbunden ist. Der Blechring erfüllt in diesem Falle eine Doppelfunktion wobei er einerseits das Widerlager für das Tellerfederpaket bildet und dadurch abrasiver Verschleiß auf der Oberfläche des Federelements sicher vermieden werden kann und andererseits einen Anschlagpuffer bildet, um eine übermäßige mechanische Beanspruchung des Tellerfederpakets und des mit dem Stützkörper verbundenen Dämpfungselements zu verhindern. Der Anschlagpuffer ist mit der in axialer Richtung angrenzenden Anschlagfläche in Eingriff bringbar, bevor das Tellerfederpaket auf Block geht.

Die Innenführung des Tellerfederpakets kann durch das erste und/oder das zweite Befestigungselement gebildet sein. Die relative Zuordnung der einzelnen Tellerfedern zueinander sowie die Montage des Lagers können durch eine derartige Ausgestaltung verbessert/vereinfacht werden.

Zur Vermeidung unerwünschter Zugspannungen innerhalb der Federelemente und/oder des Dämpfungselements ist es gemäß einer vorteilhaften Ausgestaltung vorgesehen, daß das Federelement ungehaftet innerhalb des Dämpfungselements und/oder ungehaftet am Stützkörper oder am Gehäuse festgelegt ist und/oder daß das mit dem Stützkörper verbundene Dämpfungselement ungehaftet innerhalb des Gehäuses angeordnet ist. Diese Ausgestaltung bedingt eine gute Relativbeweglichkeit der Bestandteile des Lagers zueinander, wobei sich die Bauteile in ihrer Wirkung gegenseitig nicht negativ beeinflussen.

Das Federelement kann den radial innen- und außenseitig angrenzenden Bestandteilen des Lagers jeweils mit radialem Abstand benachbart zugeordnet sein. Dabei ist von Vorteil, daß der inkompressible elastomere Werkstoff des Federelements beispielsweise bei Anschlagberührungen und tonnenförmiger Ausbauchung mit einem angrenzenden, relativ beweglichen Bauteil des Lagers nicht in Berührung kommt und dadurch die schwingungsfähige Funktionen sowie geringstmöglicher Verschleiß sichergestellt sind.

Das Dämpfungselement kann dem Gehäuse mit einem Abstand quer zur Richtung der eingeleiteten Schwingungen zugeordnet sein und zumindest einen einstückig angeformten Anschlagkörper aufweisen, der sich in Richtung des Gehäuses erstreckt, wobei der Abstand zwischen dem Anschlagkörper und dem Gehäuse kleiner ist, als der Abstand, mit dem das Gehäuse das das Gehäuse stirnseitig durchdringende erste Befestigungselement des Auflagers umschließt. Hierbei ist von Vorteil, daß Auslenkbewegungen quer zur Richtung der betriebsbedingt eingeleiteten Schwingungen innerhalb zulässiger Grenzen gehalten werden, wobei die Anschlagkörper eine Endlagendämpfung bewirken. Bevorzugt ist der Abstand zwischen dem Anschlagkörper und dem Gehäuse quer zur Richtung der eingeleiteten Schwingungen 0,5 bis 0,7 mal so groß, wie der Abstand zwischen dem ersten Befestigungselement und dem umfangsseitigen Gehäuse. Unzulässig heftige Anschlagberührungen der relativ zueinander beweglichen Bauteile und damit möglicherweise einhergehende Funktionsbeeinträchtigung des Lagers werden durch eine derartige Ausgestaltung sicher ausgeschlossen.

Das Gehäuse ist bevorzugt zweiteilig ausgebildet und aus zwei in axialer Richtung zueinander offenen Halbschalen gebildet, wobei die beiden Halbschalen miteinander formschlüssig verbunden sind. Eine der Halbschalen kann beispielsweise topfförmig ausgebildet sein und in Richtung der betriebsbedingt eingeleiteten Schwingungen das Dämpfungselement überdecken. Die zweite Halbschale des Gehäuses ist dann beispielsweise deckelförmig gestaltet, wobei die randseitige Begrenzung der topfförmigen Halbschale umgebördelt und formschlüssig mit der deckelförmigen Halbschale verbunden werden kann. Davon abweichende Ausgestaltungen des Gehäuses und deren Festlegung aneinander sind ebenfalls denkbar. Beispielsweise können beide Halbschalen außenumfangsseitig mit jeweils einem Flansch versehen sein, wobei die beiden Flanschflächen miteinander verschraubt werden können. Hierbei ist von Vorteil, daß zwischen den beiden Flanschflächen zumindest ein Distanzelement, beispielsweise in Form einer Flachdichtung angeordnet sein kann, um bei ansonsten gleichen Abmessungen des Federkörpers und des Dämpfungselements die Vorspannung und somit die Gebrauchseigenschaften des Lagers an unterschiedliche Gegebenheiten des Anwendungsfalles anpassen zu können. Besteht das Distanzelement beispielsweise aus einem elastisch nachgiebigen, polymeren Werkstoff, ist darüberhinaus von Vorteil, daß die beiden Gehäuse-Halbschalen schwingungsentkoppelt aneinander befestigt sind, und Dröhnngeräusche verhindert werden. Durch die Größe der gegenseitigen Verpressung der Halbschalen kann die Vorspannung auf die Federelemente gezielt eingestellt werden. Herstellungsbedingte Toleranzen können ausgeglichen werden.

Besonders geeignet ist das zuvor beschriebene Lager bei einer Verwendung als Motorlager zur Abstützung einer Verbrennungskraftmaschine. Hochfrequente Motorschwingungen werden durch die schwingungsentkoppelte Befestigung des Auflagers am Traglager durch das druckbelastete Tellerfederpaket isoliert, dessen Arbeitspunkt im waagerecht verlaufenden Teilbereich der Federkennlinie des Tellerfederpakets angeordnet ist. Geringe Änderungen des Federwegs, also kleine Schwingungsamplituden bei hohen Frequenzen, haben keine Änderung der Federkraft zur Folge. Ist demgegenüber die Dämpfung großamplitudiger, tieffrequenter Schwingungen erforderlich, beispielsweise beim Überfahren von Bordsteinkanten, wird der Arbeitspunkt des Tellerfederpakets aus dem waagerechten Bereich der Federkennlinie in Richtung großer Auslenkungen verlagert, wodurch sich ein progressiver Anstieg der Federsteifigkeit ergibt. Gleichzeitig wird das Dämpfungselement, das beispielsweise aus einem hochdämpfenden Weichschaum bestehen kann, elastisch verformt und bewirkt ein Abklingen der tieffrequenten Schwingung.

Das erfindungsgemäße Lager weist gute Gebrauchseigenschaften während seiner gesamten Gebrauchsdauer auf und ist im Vergleich zu Lagern, die mit einer hydraulischen Dämpfungseinrichtung versehen sind, wesentlich kostengünstiger herstellbar und einfacher montierbar.

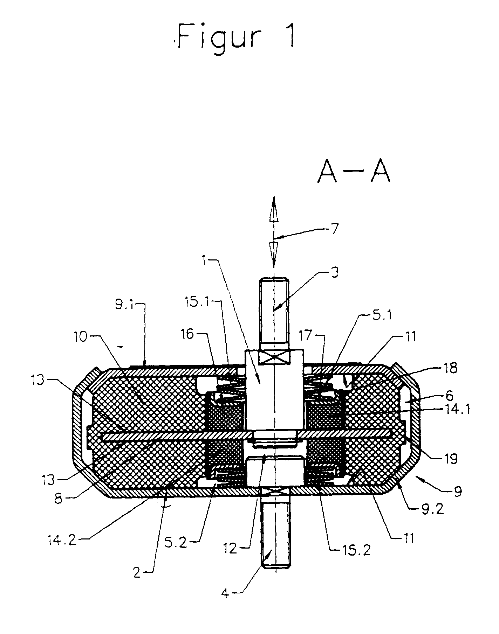

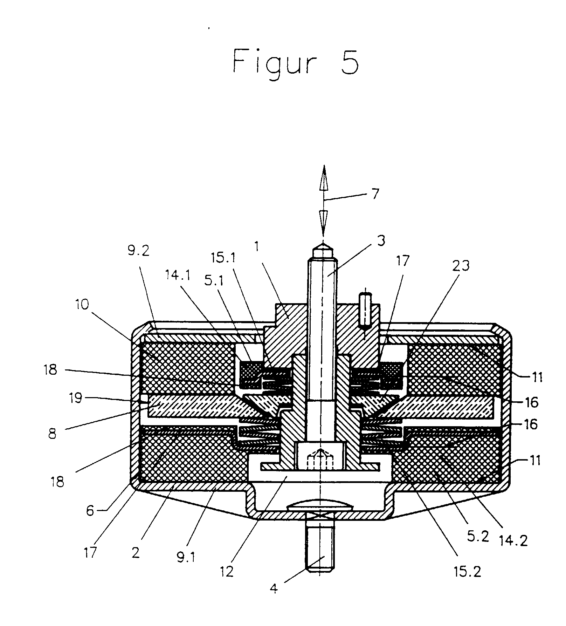

Drei beispielhafte Ausführungen des erfindungsgemäßen Lagers werden nachfolgend in den Fig. 1 und 5 näher erläutert:
In Fig. 1 ist ein erstes Ausführungsbeispiel des erfindungsgemäßen Lagers in geschnittener Darstellung gezeigt;
in Fig. 2 ist eine Draufsicht auf das Lager aus Fig. 1 dargestellt.
In Fig. 3 ist ein zweites Ausführungsbeispiel mit einer alternativen Gehäuseform dargestellt;
In Fig. 4 ist die Draufsicht auf das Lagers aus Fig. 3 gezeigt.
In Fig. 5 ist ein Drittes Ausführungsbeispiel des Lagers gezeigt, das sich in der Ausgestaltung seines Auflagers und seines Federkörpers von den Ausführungsbeispielen aus den Fig. 1 und 3 unterscheidet.

In den Fig. 1, 3 und 5 ist jeweils ein Ausführungsbeispiel eines elastischen Lagers gezeigt, das als Motorlager zur Abstützung einer Verbrennungskraftmaschine ausgebildet ist. Jeder der Lager umfaßt ein Auflager 1, das durch ein erstes Befestigungselement 3 und einen Stützkörper 8 gebildet ist, der sich quer zur Richtung 7 der eingeleiteten Schwingungen erstreckt. Der Stützkörper 8 ist außenumfangsseitig von einem Dämpfungselement 10 aus elastomerem Werkstoff umschlossen, wobei das Dämpfungselement 10 beispielsweise aus einem Weichschaum bestehen kann. Der Vorteil der Verwendung eines Weichschaums ist darin zu sehen, daß ein derartiges Material leicht und schnell zu verarbeiten ist, wodurch große Stückzahlen des Lagers innerhalb kurzer Zeit und wirtschaftlich kostengünstig herstellbar sind. Die Federrate des hier verwendeten Weichschaums beträgt 100 N/mm², der Elastizitätsmodul 1,2 N/mm². Das Gehäuse 9, das das Traglager 2 bildet, besteht aus zwei Halbschalen 9.1, 9.2, von denen die eine topfförmig 9.1 und die andere deckelförmig 9.2 ausgebildet ist. In den hier gezeigten Ausführungsbeispielen gelangen in axialer Richtung beiderseits des Stützkörpers 8 jeweils ein Federkörper 5 zur Anwendung, wobei der dem abzustützenden Bauteil zugewandte Federkörper 5.1 im wesentlichen bezüglich seiner Ausgestaltung dem Federkörper 5.2 entspricht, der auf der dem abzustützenden Bauteil abgewandten Seite des Stützkörpers 8 angeordnet ist. Sämtliche Ausführungsbeispiele sind im statisch belasteten Betriebszustand gezeigt.

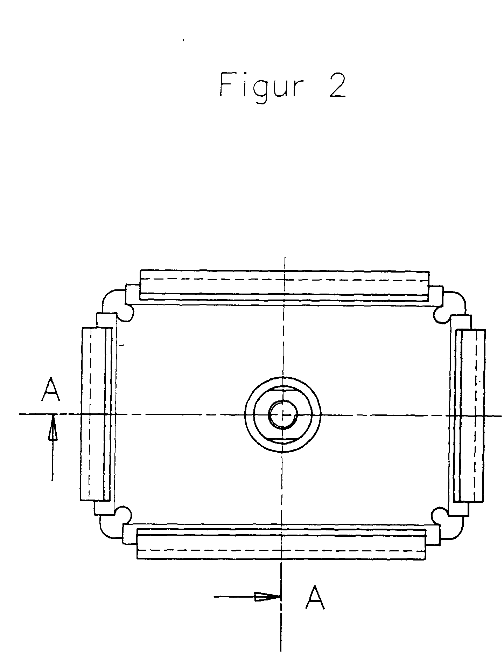

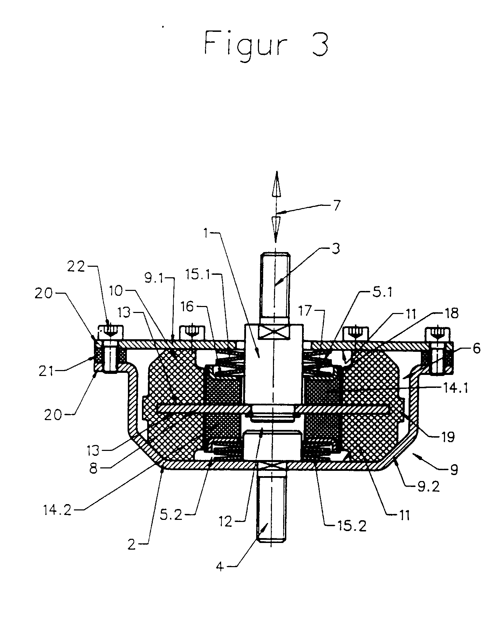

In Fig. 1 ist das elastische Lager mit einem im wesentlichen rechteckigen Gehäuse 9 und einem entsprechend ausgebildeten Dämpfungselement 10 versehen. In Fig. 1 ist das Lager aus Fig. 2 entlang der Linie A-A geschnitten dargestellt. Die rechteckige Form des Gehäuses 9 bietet sich insbesondere dann an, wenn ein kreisförmiges Lager aufgrund des begrenzten Einbauraums nur mit einer vergleichsweise kleinen Dämpfungsfläche versehen werden könnte. Das Dämpfungselement 10 ist trotz der statischen Last im wesentlichen ohne Belastung innerhalb des Gehäuses 9 angeordnet. Die statische Last, die als Druckbelastung auf den unteren Federkörper 5.2 wirkt, wird vollständig von dem Tellerfederpaket 15.2 bestehend aus 4 Tellerfedern aufgenommen. Das Tellerfederpaket 15.2 ist in axialer Richtung einerseits an der topfförmigen Gehäuse-Halbschale 9.2 und in axialer Richtung andererseits auf einer Armierung 17 abgestützt, die in diesem Ausführungsbeispiel einen einstückigen Bestandteil des Federelements 14.2 bildet. Um eine gute räumliche Zuordnung der Bestandteile des Lagers sicherzustellen, bildet das zweite Befestigungselement 4, das als Schraube ausgebildet ist, eine Innenzentrierung für das Tellerfederpaket 15.2. Auf der dem abzustützenden Bauteil zugewandten Seite des Stutzkörpers 8 ist ebenfalls ein ringförmiges Federelement 14.1 aus elastomerem Werkstoff angeordnet, das ebenfalls mit einer Armierung 17 versehen ist, die als Widerlager für das Tellerfederpaket 15.1 dient. Das Tellerfederpaket 15.1 besteht in diesem Ausführungsbeispiel ebenfalls aus vier Tellerfedern, wobei sich die Federcharakteristik der Tellerfederpakete 15.1, 15.2 voneinander unterscheidet. Die voneinander abweichenden Federcharakteristika können durch einen voneinander abweichenden Werkstoff der einzelnen Tellerfedern und/oder durch eine voneinander abweichende Größe erzielt werden. Das hier gezeigte Lager weist ebenso, wie die Ausführungsbeispiele aus den Fig. 3 und 5 eine Wirksamkeit zur Dämpfung/Isolierung von Schwingungen sowohl in Druck- als auch in Zugrichtung auf. Im hier dargestellten Betriebszustand ist das Tellerfederpaket 15.1 nur leicht vorgespannt, um Klappergeräusche während des Betriebs zu vermeiden.

In Fig. 2 ist das Lager aus Fig. 1 in einer Draufsicht gezeigt. Es ist zu erkennen, daß die deckelförmige Gehäuse-Halbschale 9.1 das erste Befestigungselement 3 mit radialem Abstand umfangsseitig umschließt, wobei selbst bei Einleitung von Querkräften in das Lager eine Anschlagberührung der beiden Teile nicht erfolgt. Die Anschlagkörper 19, die einstückig mit dem Dämpfungselement 10 ausgebildet sind, sind der topfförmigen Gehäuse-Halbschale 9.2 in einem Abstand, benachbart, der kleiner ist, als der Abstand mit dem die deckelförmige Gehäuse-Halbschale 9.1 das erste Befestigungselement 3 umschließt.

Um eine negative Beeinflussung von Dämpfungselement 10 und Federelement 14 aufeinander zu verhindern, sind die Federkörper 5.1 , 5.2 ungebunden innerhalb der zylindrischen Ausnehmung 12 des Dämpfungselements 10 angeordnet.

Das in Fig. 3 gezeigte Lager unterscheidet sich von dem in Fig. 1 gezeigten Ausführungsbeispiel durch ein Gehäuse, das abweichend ausgebildet ist. Sowohl die topfförmige Halbschale 9.2 als auch die deckelförmige Halbschale 9.1 sind jeweils mit einem in diesem Ausführungsbeispiel radial nach außen vorstehenden Befestigungsflansch 20 versehen, wobei zwischen den beiden Flanschflächen ein Distanzelement 21 aus elastomerem Werkstoff angeordnet ist. Hierbei ist von Vorteil, daß die beiden Gehäuse-Halbschalen 9.1, 9.2 schwingungsentkoppelt aneinander festgelegt sind und dadurch die Übertragung störender Schwingungen weiter reduziert ist. Desweiteren hat eine derartige Ausgestaltung den Vorteil, daß bei identische Abmessungen der Federkörper 5.1, 5.2 und des Dämpfungselements 10 unterschiedliche Vorspannungen in Abhängigkeit von der Dicke des Distanzelements 21 und dem Anzugsdrehmoment der Schrauben 22 eingestellt werden können. Außerdem können Setzungserscheinungen der Federkörper beispielsweise dadurch ausgeglichen werden, daß das bestehende Distanzelement 21 gegen ein dünneres Distanzelement ausgetauscht oder vollständig entfernt wird. Außerdem besteht die Möglichkeit, das Anzugsdrehmoment der Befestigungsschrauben im Rahmen einer Inspektion zu vergrößern. Ein derartiger Ausgleich von Setzungserscheinungen bietet sich insbesondere für hochbeanspruchte und/oder in ihren Abmessungen große Lager an, deren Austausch vergleichsweise teuer ist.

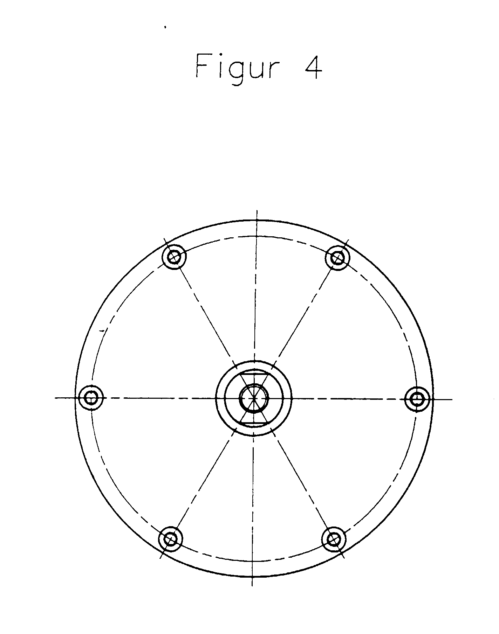

In Fig. 4 ist zu erkennen, daß das hier gezeigte Ausführungsbeispiel im Gegensatz zu dem Ausführungsbeispiel aus Fig. 2 kreisförmig ausgebildet ist.

In Fig. 5 ist ein drittes Ausführungsbeispiel gezeigt, ähnlich dem Ausführungsbeispiel aus den Fig. 1 und 3, wobei die Abstützung der Federkörper 5.1, 5.2 abweichend konstruiert ist. Im Gegensatz zu den zuvor beschriebenen Ausführungsbeispielen sind die ringförmigen Federelemente 14.1, 14.2 aus elastomerem Werkstoff nicht auf den Oberflächen des Stützkörpers 8 angeordnet, sondern auf den stirnseitigen Innenflächen 11 des Gehäuses 9. Demgegenüber sind die Tellerfederpakete 15.1, 15.2 in axialer Richtung einerseits auf den Armierungen 17 der Federelemente 14.1, 14.2 abgestützt und in axialer Richtung andererseits auf dem Stützkörper 8. Der Stützkörper 8 ist in diesem Ausführungsbeispiel zweiteilig ausgebildet, wobei der Zentralbereich 23 des Stützkörpers 8 durch eine kegelig Berührungsfläche auf dem kreisringförmigen Teilbereich des Stützkörpers 8 gelagert ist.

Werden beispielsweise tieffrequente Schwingungen mit großen Amplituden in das Lager aus Fig. 3 eingeleitet, ergibt sich zunächst eine Zusammenpressung des Tellerfederpakets 15.1, bis der Anschlagpuffer 18 des Federelements 14.1 die Oberfläche des Stützkörpers 8 berührt. Anschließend wird auch das Tellerfederpaket 15.2 in axialer Richtung zusammengedrückt, in gleichem Maße, wie das Dämpfungselement 10. Die tieffrequenten Schwingungen werden dadurch gedämpft. Wird das Lager demgegenüber auf Zug belastet, wird zunächst das Tellerfederpaket 15.2 maximal soweit verformt, bis der Anschlagpuffer 18 des Federelements 14.2 mit dem Stützkörper 8 in Berührung gelangt. Gleichzeitig bewegt sich der Zentralbereich des Stützkörper 8 mit dem Tellerfederpaket 15.1 und dem entsprechenden Federelement 14.1 in Richtung der strinseitigen Innenfläche 11 des Gehäuses 9. Die axiale Ausdehnung des Federelements 14.1 begrenzt die Relativbewegung des Auflagers 1 bezogen auf das Traglager 2 bei Einleitung von Zugbelastungen, wobei die Dämpfung durch den Teilbereich des Dämpfungselements 10 vorgenommen wird, der dem abzustützenden Bauteil benachbart zugeordnet ist. Der Verformungsweg der elastischen Verformung des Dämpfungselements 10 wird durch den Abstand zwischen dem Anschlagpuffer 18 und der Oberfläche des Stützkörpers 8 bestimmt.

Die Ausgestaltungen der hier gezeigten Ausführungsbeispiele sind beliebig miteinander kombinierbar, wobei beispielsweise das Gehäuse 9 des Ausführungsbeispiels aus Fig. 2 bei einem Ausführungsbeispiel gemäß Fig. 3 zur Anwendung gelangen kann, wohingegen die Zuordnung der Federkörper 5.1, 5.2 und des Dämpfungselements 10 sowie des Stützkörpers 8 bei einem Ausführungsbeispiel gemäß den Fig. 1 und 2 Anwendung finden kann.

## Patentansprüche

1. Elastisches Lager, umfassend ein Auflager und ein Traglager, die jeweils mit einem Befestigungselement versehen sind und durch zumindest einen Federkörper aus elastomerem Werkstoff und zumindest eine Dämpfungsvorrichtung aufeinander abgestützt sind, dadurch gekennzeichnet, daß das Auflager (1) einen sich im wesentlichen quer zur Richtung (7) der eingeleiteten Schwingungen erstreckenden Stützkörper (8) aus zähhartem Werkstoff umfaßt, daß das Traglager (2) ein trommelförmiges Gehäuse (9) umfaßt, das den Stützkörper (8) im wesentlichen allseitig umschließt, daß der Stützkörper (8) zumindest von einem als Dämpfungsvorrichtung (6) ausgebildeten ringförmigen Dämpfungselement (10) aus elastomerem Werkstoff zugeordnet ist, das unter statischer Vorlast des Lagers im wesentlichen spannungsfrei die stirnseitigen Innenflächen (11) des Gehäuses (9) anliegend berührt und daß in der zylinderförmigen Ausnehmung (12) des Dämpfungselements (10), axial beiderseits des Stützkörpers (8), zumindest jeweils ein Federkörper (5.1, 5.2) angeordnet ist und daß die Federkörper (5.1, 5.2) unter axialer Vorspannung zwischen der Oberfläche (13) des Stützkörpers (8) und der jeweils angrenzenden stirnseitigen Innenfläche (11) des Gehäuses (9) abgestützt sind.

2. Lager nach Anspruch 1, dadurch gekennzeichnet, daß zumindest der unter statischer Vorlast des Lagers druckbelastete Federkörper (5.2) zweiteilig ausgebildet ist und aus einem ringförmigen Federelement (14.2) aus elastomerem Werkstoff und einen funktionstechnisch dazu in Reihe geschalteten Tellerfederpaket (15.2), umfassend zumindest zwei Tellerfedern, besteht und daß die Federrate des druckbelasteten Tellerfederpakets (15.2) unter statischer Vorlast des Lagers in einem bestimmten Bereich sehr klein ist.

3. Lager nach Anspruch 1 bis 2, dadurch gekennzeichnet, daß auf der dem Tellerfederpaket (15.2) zugewandten Stirnseite (16) des Federelements (14.2) eine Armierung (17) angeordnet ist, die das Tellerfederpaket (15.2) in Richtung (7) der eingeleiteten Schwingungen umfangsseitig zumindest teilweise umschließt und eine Außenführung bildet und daß die Armierung (17) zur Begrenzung der relativen Auslenkbewegungen von Stützkörper (8) und Gehäuse (9) als Anschlagpuffer (18) ausgebildet ist, der mit dem axial mit Abstand benachbarten Stützkörper (8) oder dem Gehäuse (10) in Berührung bringbar ist.

4. Lager nach Anspruch 3, dadurch gekennzeichnet, daß die Armierung (17) durch einen topfförmigen Blechring gebildet ist, der mit dem jeweils angrenzenden Federelement (14) adhäsiv verbunden ist.

5. Lager nach Anspruch 1 bis 4, dadurch gekennzeichnet, daß eine Innenführung des Tellerfederpakets (15) durch das erste und/oder das zweite Befestigungselement (3, 4) gebildet ist.

6. Lager nach Anspruch 1 bis 5, dadurch gekennzeichnet, daß das Federelement (14) ungehaftet innerhalb des Dämpfungselements (10) und/oder ungehaftet am Stützkörper (8) oder am Gehäuse (9) festgelegt ist und/oder daß das mit dem Stützkörper (8) verbundene Dämpfungselement (10) ungehaftet innerhalb des Gehäuses (9) angeordnet ist.

7. Lager nach Anspruch 1 bis 6, dadurch gekennzeichnet, daß das Federelement (14) den radial innen- und außenseitig angrenzenden Bestandteilen des Lagers jeweils mit Abstand benachbart zugeordnet ist.

8. Lager nach Anspruch 1 bis 7, dadurch gekennzeichnet, daß das Dämpfungselement (10) dem Gehäuse (9) mit einem Abstand quer zur Richtung (7) der eingeleiteten Schwingungen zugeordnet ist und zumindest einen einstückig angeformten Anschlagkörper (19) aufweist, der sich in Richtung des Gehäuses (9) erstreckt, wobei der Abstand zwischen Anschlagkörper (19) und Gehäuse (9) kleiner ist als der Abstand, mit dem das Gehäuse (9) das das Gehäuse (9) stirnseitig durchdringende erste Befestigungselement (3) des Auflagers (1) umschließt.

9. Lager nach Anspruch 1 bis 8, dadurch gekennzeichnet, daß das Gehäuse (9) zweiteilig ausgebildet ist und aus zwei in axialer Richtung zueinander offenen Halbschalen (9.1, 9.2) besteht und daß die beiden Halbschalen (9.1, 9.2) miteinander formschlüssig verbunden sind.

10. Lager nach Anspruch 1 bis 9, gekennzeichnet durch die Verwendung als Motorlager.

## Claims

1. An elastic mounting, comprising a supporting mount and a bearing mount, which are each provided with a fastening element and are supported on one another by at least one spring body made of elastomer material and at least one damping device, characterized in that the supporting mount (1) comprises a support body (8) made of a tough material which extends substantially transversely relative to the direction (7) of the vibrations introduced, in that the bearing mount (2) comprises a drum-shaped housing (9) which surrounds the support body (8) substantially on all sides, in that the support body (8) is associated with at least one annular damping element (10) which is made of an elastomer material, is designed as a damping device (6), and touches the end-face inner surfaces (11) of the housing (9), resting against them, substantially without tension under static preloading of the mounting, and in that at least one spring body (5.1, 5.2) is arranged in each case in the cylindrical cutout (12) in the damping element (10), axially on both sides of the support body (8), and in that the spring bodies (5.1, 5.2) are supported under axial prestress between the surface (13) of the support body (8) and the respectively adjacent end-face inner surface (11) of the housing (9).

2. A mounting according to claim 1, characterized in that at least the spring body (5.2) which is loaded to compression under static preloading of the mounting is of two-part design and is composed of an annular spring element (14.2) made of an elastomer material and a plate-spring assembly (15.2), comprising at least two plate springs, which is connected in terms of function in series with the said spring element, and in that the spring characteristic of the plate-spring assembly (15.2) loaded to compression is very small within a specific range under static preloading of the mounting.

3. A mounting according to either of claims 1 and 2, characterized in that a reinforcement (17) is arranged on the end (16) of the spring element (14.2) facing the plate-spring assembly (15.2), which reinforcement at least partially surrounds the plate-spring assembly (15.2) on the circumferential side in the direction (7) of the vibrations introduced and forms an external guide, and in that the reinforcement (17) is designed as a stop buffer (18) to limit the relative deflection movements of the support body (8) and the housing (9), which stop buffer can be brought into contact with the housing (10) or the support body (8) which is axially adjacent with spacing.

4. A mounting according to claim 3, characterized in that the reinforcement (17) is formed by a pot-shaped sheet-metal ring which is adhesively connected to the respectively adjacent spring element (14).

5. A mounting according to any of claims 1 to 4, characterized in that an internal guide of the plate-spring assembly (15) is formed by the first and/or second fastening element (3, 4).

6. A mounting according to any of claims 1 to 5, characterized in that the spring element (14) is fixed without adhesion within the damping element (10) and/or without adhesion on the support body (8) or on the housing (9), and/or in that the damping element (10) connected to the support body (8) is arranged without adhesion within the housing (9).

7. A mounting according to any of claims 1 to 6, characterized in that the spring element (14) is arranged in each case with spacing next to the components of the mounting adjoining radially on the inner and outer sides.

8. A mounting according to any of claims 1 to 7, characterized in that the damping element (10) is associated with the housing (9) with a spacing transversely relative to the direction (7) of the vibrations introduced and has at least one integrally moulded-on stop body (19) which extends in the direction of the housing (9), the spacing between the stop body (19) and the housing (9) being smaller than the spacing with which the housing (9) surrounds the first fastening element (3) of the supporting mount (1) passing through the housing (9) at the end face.

9. A mounting according to any of claims 1 to 8, characterized in that the housing (9) is of two-part design and is composed of two semi-shells (9.1, 9.2) which are open towards one another in the axial direction, and in that the two semi-shells (9.1, 9.2) are connected to one another with positive engagement.

10. A mounting according to any of claims 1 to 9, characterized by the use as an engine mounting.

## Revendications

1. Support élastique, comprenant un coussinet et un palier d'appui, qui sont respectivement pourvus d'un élément de fixation et sont appuyés l'un sur l'autre par au moins un corps de ressort en matière élastomère et au moins un dispositif d'amortissement, caractérisé en ce que le coussinet (1) comprend un corps d'appui (8) en matière dure s'étendant essentiellement transversalement au sens (7) des vibrations induites, en ce que le palier d'appui (2) comprend un boîtier (9) en forme de tambour, qui entoure le corps d'appui (8) essentiellement de tout côté, en ce que le corps d'appui (8) est associé à un élément d'amortissement (10) annulaire, en matière élastomère, conçu comme dispositif d'amortissement (6), cet élément touchant de façon adjacente les surfaces internes frontales (11) du boîtier (9) par précharge statique du support essentiellement sans contrainte et en ce que, dans l'évidement (12) cylindrique de l'élément d'amortissement (10), axialement des deux côtés du corps d'appui (8), est disposé au moins à chaque fois un corps de ressort (5.1, 5.2) et en ce que les corps de ressort (5.1, 5.2) sont appuyés par précontrainte axiale entre la surface (13) du corps d'appui (8) et la surface interne frontale (11) à chaque fois adjacente du boîtier (9).

2. Support selon la revendication 1, caractérisé en ce qu'au moins le corps de ressort (5.2) soumis à pression par précharge statique du support est conçu en deux parties et se compose d'un élément de ressort (14.2) annulaire en matière élastomère et d'un bloc-ressort à disques (15.2) monté fonctionnellement en série avec celui-ci, comprenant au moins deux ressorts à disques, et en ce que le taux d'élasticité du bloc-ressort à disques (15.2) soumis à pression par précharge statique du support est très petit dans une certaine zone.

3. Support selon l'une des revendications 1 à 2, caractérisé en ce que sur la face frontale (16) de l'élément de ressort (14.2), orientée vers le bloc-ressort à disques (15.2), est disposée une armature (17), qui entoure au moins partiellement le bloc-ressort à disques (15.2) de façon périphérique dans le sens (7) des vibrations induites et forme un guidage extérieur et en ce que l'armature (17) visant à limiter des mouvements de sortie relatifs du corps d'appui (8) et du boîtier (9) est conçue comme tampon d'arrêt (18), qui peut être mis en contact avec le corps d'appui (8) axialement contigu à une certaine distance ou avec le boîtier (10).

4. Support selon la revendication 3, caractérisé en ce que l'armature (17) est formée par un anneau en tôle en forme de pot, qui est relié de façon adhésive à l'élément de ressort (14) respectivement adjacent.

5. Support selon l'une des revendications 1 à 4, caractérisé en ce qu'un guidage interne du bloc-ressort à disques (15) est formé par le premier et / ou le deuxième élément de fixation (3, 4).

6. Support selon l'une des revendications 1 à 5, caractérisé en ce que l'élément de ressort (14) est fixé sans être collé à l'intérieur de l'élément d'amortissement (10) et / ou sans être collé au corps d'appui (8) ou au boîtier (9) et / ou en ce que l'élément d'amortissement (10) relié au corps d'appui (8) est disposé sans être collé à l'intérieur du boîtier (9).

7. Support selon l'une des revendications 1 à 6, caractérisé en ce que l'élément de ressort (14) est associé à chaque fois de façon contiguë à une certaine distance aux parties constitutives du support, radialement adjacentes du côté interne et du côté externe.

8. Support selon l'une des revendications 1 à 7, caractérisé en ce que l'élément d'amortissement (10) est associé au boîtier (9) à une certaine distance transversalement au sens (7) des vibrations induites et présente au moins un corps d'arrêt (19) solidaire d'une seule pièce, qui s'étend dans le sens du boîtier (9), la distance entre le corps d'arrêt (19) et le boîtier (9) étant plus petite que la distance à laquelle le boîtier (9) entoure le premier élément de fixation (3) du coussinet (1), ledit élément pénétrant le boîtier (9) du côté frontal.

9. Support selon l'une des revendications 1 à 8, caractérisé en ce que le boîtier (9) est conçu en deux parties et est composé de deux demi-coques (9.1, 9.2) ouvertes l'une vers l'autre dans le sens axial et en ce que les deux demi-coques (9.1, 9.2) sont reliées ensemble par engagement positif.

10. Support selon l'une des revendications 1 à 9, caractérisé par son utilisation en tant que support de moteur.
